# EUROPEAN PATENT APPLICATION

(11) **EP 1 411 414 A2**
(43) Date of publication of application: **21.04.2004**
(21) Application number: 03022265.7
(22) Date of filing: 01.10.2003
(51) Int. Cl.: G06F 1/16, G06F 3/033

(54) **Information processing apparatus**

(30) Priority: 04.10.2002 JP 2002291836
(71) Applicant: Kabushiki Kaisha Toshiba, Tokyo (JP)
(72) Inventor: Numano, Fujihito, Toshiba Cor. , Int.Prop.Div., Tokyo 105-8001 (JP)
(74) Representative: Henkel, Feiler & Hänzel

(57) **Abstract**

An information processing apparatus comprises a main display unit (121) which displays a main operation screen; a sub-display unit (112) which displays a sub-operation screen, and a unit (201, 202) for displaying a moving-image playback picture on the sub-display unit.

## Description

The present invention relates to an information processing apparatus including a display unit and having a moving-image playback function.

In recent information processing apparatuses including a display unit easy to carry such as a personal computer, various kinds of pictures including moving-image playback pictures can be viewed with improvement of processing performance and intensification of processing function. If it is intended to execute other processing when a picture, for example, moving image or still image is displayed on such an information processing apparatus, its work is started by opening a working window through cascade indication or title indication.

When the working window is opened through the cascade indication, however, the working window is opened on a window in which the picture is displayed. Thus, there occurs such a problem from viewpoints of work efficiency and operability that during the work, the picture cannot be viewed. Further, if the working window is opened through the title indication, a picture display window and a working window are placed in parallel within such a limited working area. Thus, if a large working window is secured, it is difficult to see the picture and if a large picture display window is secured, the work efficiency is worsened, thereby providing a problem in viewpoints of work efficiency and operability also. Further, depending on the capacity of the display driver, picture drawing processing may affect the picture drawing processing in the working window, thereby often obstructing the work.

On the other hand, in addition to the above-mentioned display unit which displays various kinds of windows (for example, color LCD monitor), an apparatus having a display unit (sub-display) having small screens.has been developed (for example, see Jpn. Pat. Appln. KOKAI Publication No. 2000-339097).

In such a unit having the sub-display, limited specific functions, for example, CD player condition, a calendar, a calculator, a ten-key and the like can be displayed in the sub-display selectively.

However, in this kind of apparatus also, if it is intended to execute other processing when the aforementioned picture such as moving image or still image is displayed, the work needs to be started by opening the working window through the cascade indication or the title indication. Therefore, the problems on the work efficiency and the operability cannot be solved.

As described above, if it is intended to execute other processing when a picture such as moving image or still image is displayed in the conventional information processing apparatus, a working window needs to be opened through the cascade indication or the title indication before starting the work, thereby providing problems in viewpoints of work efficiency and operability.

An object of the present invention is to provide an information processing apparatus capable of providing with a display environment having an excellent operability.

In an information processing apparatus according to an aspect of the present invention, a sub-display unit used for a specific operation or work includes a mechanism for displaying a playback picture of moving image or still image, and a moving-image playback picture, still image or various kinds of images displayed on a main display unit can be displayed on the sub-display unit through switching operation.

An information processing apparatus according to a first aspect of the present invention is characterized by comprising: a main display unit (121) which displays a main operation screen; a sub-display unit (112) which displays a sub-operation screen; and means (201, 202) for displaying a moving-image playback picture on the sub-display unit.

An information processing apparatus according to a second aspect of the present invention is characterized by comprising: a main display unit (121) which displays a main operation screen capable of mouse pointer operation; a sub-display unit (112) which displays a sub-operation screen capable of a predetermined operation; and means (201, 202) for displaying a picture on the sub-display unit by a predetermined operation.

An information processing apparatus according to a third aspect of the present invention is characterized by comprising: a main display unit (121) which displays a main operation screen capable of mouse pointer operation; a sub-display unit (112) which displays a sub-operation screen capable of a predetermined operation; and means (201, 202) for displaying a content to be displayed on the main display unit through a predetermined operation on the sub-display unit.

The present invention is established for not only the apparatus mentioned above, but also a method for achieving a function to be executed on that apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an outer appearance of an information processing apparatus according to an embodiment of the present invention;
FIG. 2 is a block diagram showing a system configuration of a computer according to the embodiment of the present invention;
FIGS. 3A and 3B are explanatory diagrams of an operation of the embodiment of the present invention;
FIGS. 4A and 4B are explanatory diagrams of an operation of the embodiment of the present invention;
FIGS. 5A and 5B are explanatory diagrams of an operation of the embodiment of the present invention;
FIG. 6 is a diagram showing a display operation of the embodiment of the present invention;
FIG. 7 is a flow chart showing a display switching control procedure of a sub-display unit according to the embodiment of the present invention;
FIG. 8 is a flow chart showing a first display processing procedure for character information on the sub-display unit according to the embodiment of the present invention; and
FIG. 9 is a flow chart showing a second display processing procedure for character information on the sub-display unit according to the embodiment of the present invention.

Hereinafter, the embodiment of the present invention will be described with reference to the accompanying drawings.

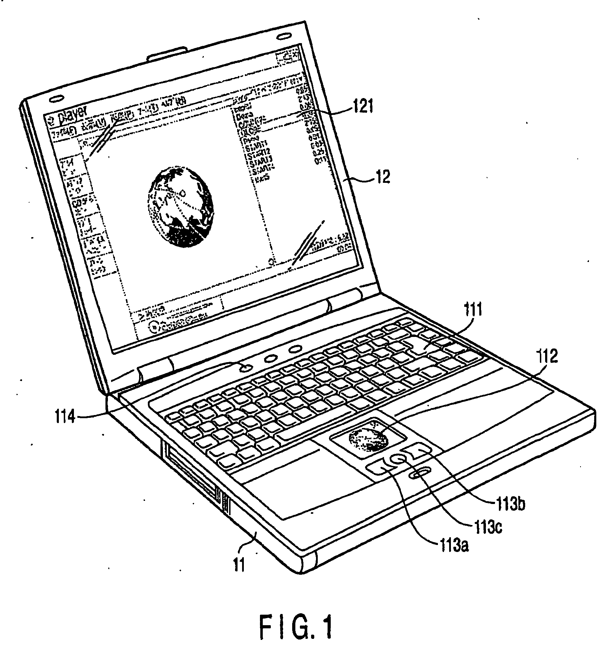

FIG. 1 is a perspective view showing an outer appearance of an information processing apparatus according to the embodiment of the present invention. FIG. 1 exemplifies a notebook type personal computer.

The computer according to the embodiment of the present invention shown in FIG. 1 has a computer main body 11 and a display unit 12. The display unit 12 contains a main display unit 121 composed of LCD. The display unit 12 is mounted on the computer main body 11 rotatably between its release position and its closed position. The computer main body 11 has a thin box-shaped casing and a power button 114 for turning ON/OFF power of the computer main body 11, a key board 111 and the like are disposed on the top face of the casing. An arm rest is formed on the top face of the casing forward of the keyboard 111. A sub-display unit 112 having touch screen function is provided substantially in the center of the keyboard 111. The sub-display unit 112 is a pointing device in which a display panel such as LCD having a smaller screen than the main display unit 121 and a tablet are integrated. The sub-display unit 112 is disposed on the top face of the casing which forms the arm rest together with a left button 113a, a right button 113b and a middle button 113c. Although in FIG. 1, the sub-display unit 112 is disposed within a display unit closing plane on the arm rest, it may be provided at a position which allows it to.be always seen regardless of the opening or closing of the display unit 12, thereby the picture display function of the sub-display unit 112 being intensified. The picture display function of the sub-display unit 112 at this time will be described later.

The sub-display unit 112 has display control means (display driver) dedicated for the sub-display unit 112. The display control means has a moving-image playback picture display function of generating a frame of a moving image to be displayed on the sub-display unit 112 and displaying a moving-image playback picture on the sub-display unit 112. Consequently, the sub-display unit 112 can display a moving-image playback picture inherent of the sub-display unit 112 or a moving-image playback picture displayed on the main display unit 121 if necessary or an external visual content regardless of a display on the main display unit 121. Further, various kinds of pictures containing moving-image playback pictures are edited on the sub-display unit 112 and the edited picture can be displayed on the main display unit 121. A specific processing function using the sub-display unit 112 will be described later.

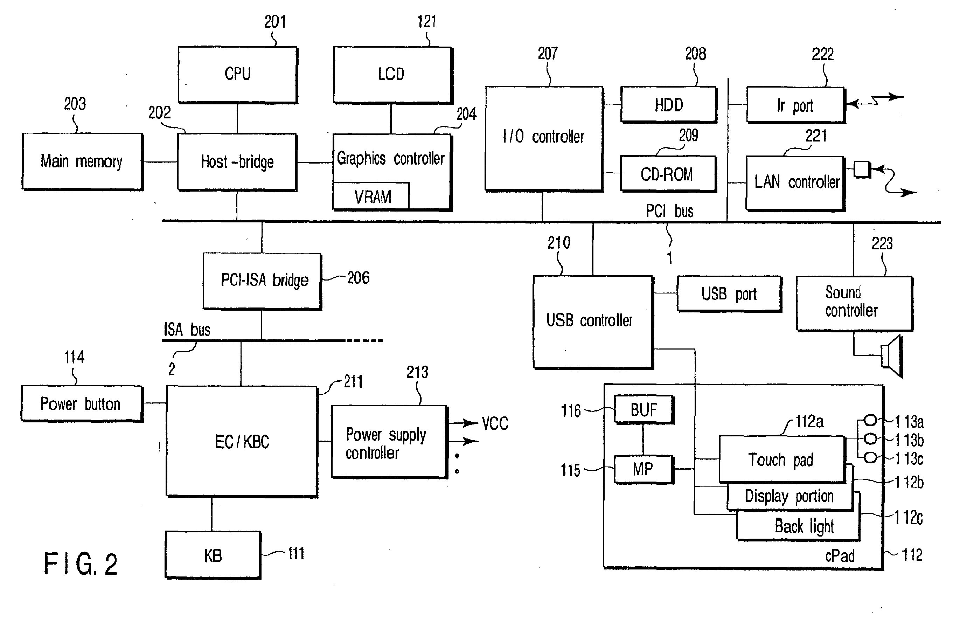

FIG. 2 is a block diagram showing a system configuration of the computer shown in FIG. 1. As shown in FIG. 1, this computer has a CPU 201, a host bridge 202, a main memory 203, a graphics controller 204, a PCI-ISA bridge 206, an I/O controller 207, a hard disk drive (HDD) 208, a CD-ROM drive 209, a USB controller 210, a LAN controller 221, an infrared ray port (Ir port) 222, a sound controller 223, an embedded controller/keyboard controller IC (EC/KBC) 211, a power supply controller 213 and the like.

The sub-display unit 112 is connected to the USB controller 210. The sub-display unit 112 is formed by integrating a touch pad 112a, a display portion 112b and a back light 112c so as to achieve touch screen function and includes the left button 113a, the right button 113b and the middle button 113c.

Further, the sub-display unit 112 contains a dedicated micro processor (MP) 115, a picture buffer (BUF) 116 and the like.

Under a control of the microprocessor (MP) 115, the picture buffer (BUF) 116 stores picture data such as moving-image playback picture, still image and the like inputted through a PCI bus 1 and the USB controller 210 temporarily. At this time, under a control of the USB driver following an instruction of the CPU 201, the USB controller 210 fetches picture data sent to the PCI bus 1 and sends to the sub-display unit 112.

The microprocessor (MP) 115 reconstructs picture data (picture frame) stored in the picture buffer (BUF) 116 following the screen configuration of the sub-display unit 112 and a predetermined display rate and generates a new display frame so as to drive and control the display portion 112b of the sub-display unit 112.

Further, the microprocessor (MP) 115 has the following various kinds of control functions relating to the picture display processing of the sub-display unit 112 and processing functions.
(1) Storing picture data displayed on the main display unit 121 in the picture buffer (BUF) 116 through the PCI bus 1 and the USB controller 210 following an instruction of the CPU 201.
(2) Sending picture data displayed on the picture buffer (BUF) 116 to the main display unit 121.
(3) Editing and processing pictures by the touch unit of the sub-display unit 112.

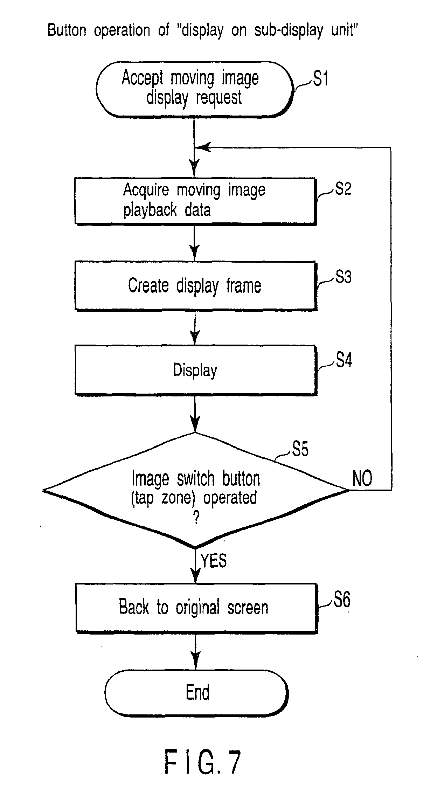

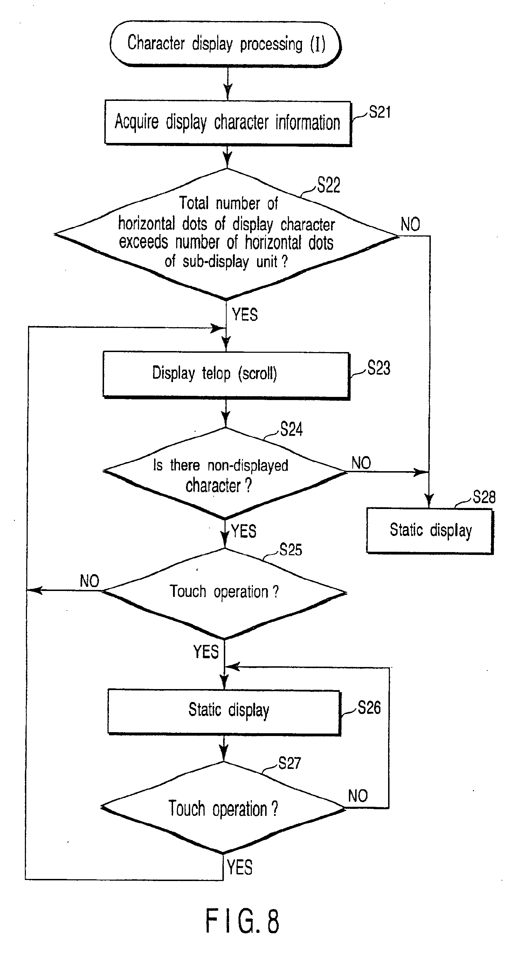

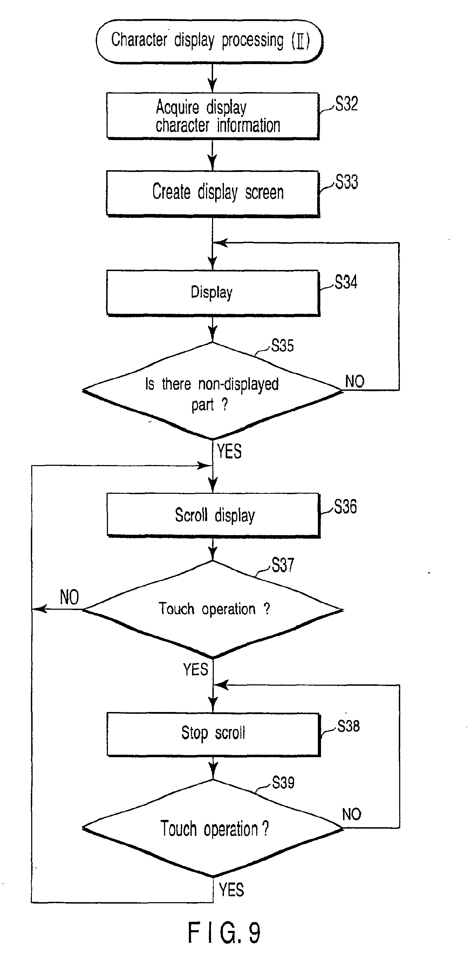

The CPU 201 controls an operation of the main computer. The CPU 201 executes an operating system and application program/utility program loaded to a main memory 203 from the hard disk drive (HDD) 208. According to this embodiment, the CPU 201 executes the following control.
(1) Transferring picture data such as moving-image playback picture, still image stored in the hard disk drive (HDD) 208 and picture data such as moving-image playback picture and still image received by the LAN controller 221 through the network, and the like to the microprocessor (MP) 115 provided on the sub-display unit 112 through the PCI bus 1 and the USB controller 210.
(2) Transferring remote control command relating to picture display processing of the sub-display unit 112 received by the infrared ray port (Ir port) 222 to the microprocessor (MP) 115 provided on the sub-display unit 112 through the PCI bus 1 and the USB controller 210.
(3) Selectively muting sound accompanying a picture displayed on the sub-display unit 112.
(4) Switching display of the sub-display unit 112 shown in FIG. 7 described later.
(5) Controlling display processing on character information on the sub-display unit 112 shown in FIGS. 8 and 9.

A host bridge 202 is a bridge device for connecting between the local bus of the CPU 201 and the PCI bus 1 bidirectionally. The graphic controller 204 includes a video RAM (VRAM) which under a control of a dedicated display driver, controls the main display unit 121 used as a display monitor of this computer. The I/O controller 207 controls the hard disk drive (HDD) 208, the CD-ROM drive 209 and the like. The PCI-ISA bridge 206 is a bridge device for connecting the PCI bus 1 and the ISA bus 2 bidirectionally and incorporates, various kinds of system devices, for example, a system timer, a DMA controller, an interruption controller and the like.

The embedded controller/keyboard controller IC (EC/KBC) 211 is a one-chip microcomputer in which the embedded controller (EC) for power control and the keyboard controller (KBC) for controlling the keyboard 111 are integrated. The embedded controller/keyboard controller IC (EC/KBC) 211 turns ON/OFF power of the computer corresponding to an operation of the power button 114 by a user in cooperation with the power supply controller 213.

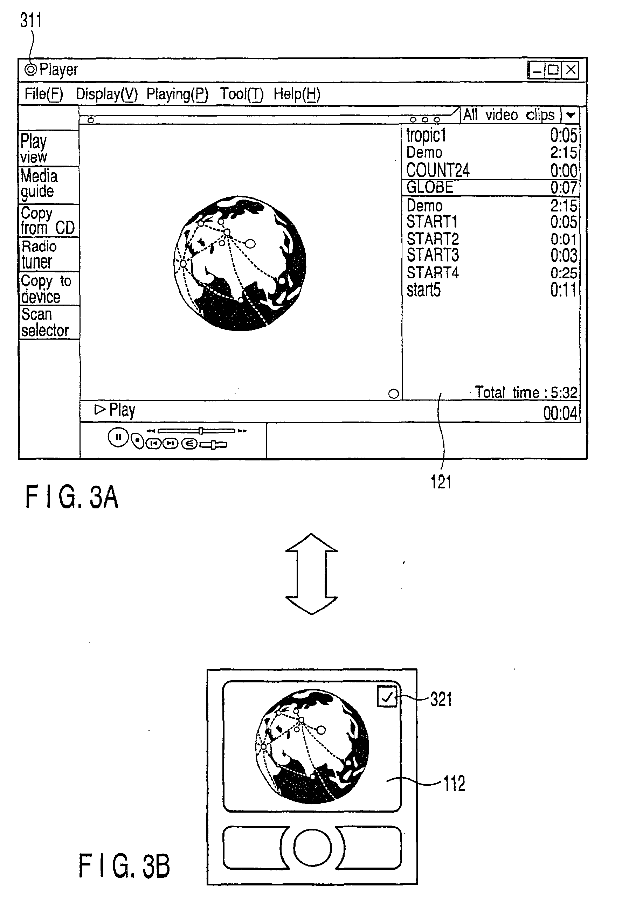

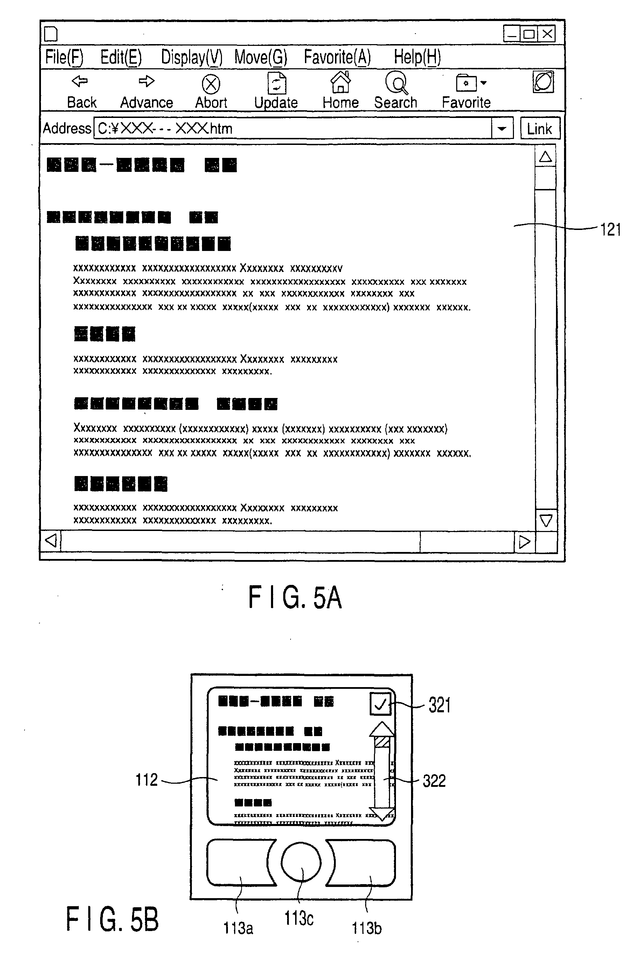

FIGS. 3A to 5B are diagrams showing a specific example of a display screen for explaining the picture display processing function of the sub-display unit 112 according to the embodiment of the present invention. In this example, a "display on the sub-display" button 311, which is operated by a mouse pointer, is provided on a display screen of the main display unit 12L and a tap zone (hereinafter referred to as "picture switching" button) for instructing switching of pictures is provided on the display screen of the sub-display unit 112. A sub-display screen which is scrolled as shown in FIG. 5B has a scroll bar 322 and operating this scroll bar by touch enables switching of display area, scroll direction, scroll speed and the like to be controlled.

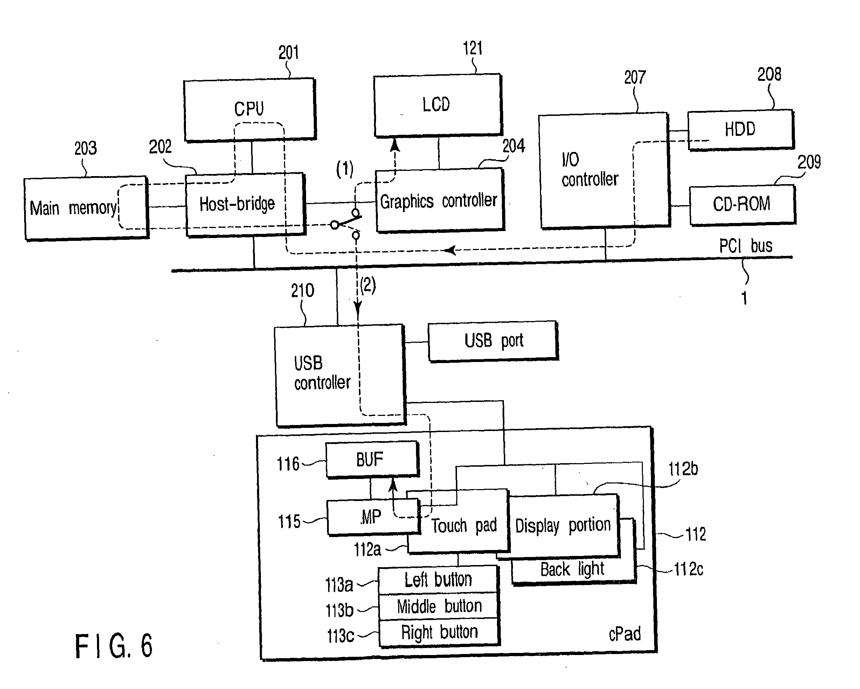

FIG. 6 is a diagram showing a flow of picture data for explaining the picture display processing function of the sub-display unit 112 according to the embodiment of the present invention. FIG. 6 shows schematically a picture data transfer route for switching a display of picture data such as moving-image playback picture and still image read out from the hard disk drive (HDD) 208 as an example. Referring to FIG. 6, (1) indicates a transfer route to the main display unit 121, and (2) displays a transfer route to the sub-display unit 112. When switching a display of picture data displayed on the sub-display unit 112 to that on the main display unit 121, if an opposite route from (2) to (1) is taken, a picture data transfer route can be understood easily. Picture data such as moving-image playback picture and still image received by the LAN controller 221 through the network is transferred through the PCI bus 1.

FIG. 7 is a flow chart showing a display switching control procedure of the sub-display unit 112 according to the embodiment of the present invention, which is executed under a control of the microprocessor (MP) 115. If the "display on the sub-display" button 311 shown in FIG. 3A is clicked through a mouse (or cPAD), the microprocessor (MP) 115 receives command thereof and then, for example, the picture buffer (BUF) 116 fetches picture data of a moving image. The picture data (picture frame) is reconstructed following the screen configuration of the sub-display unit 112 and a predetermined display rate so as to generate a new display frame. Then, the microprocessor (MP) 115 drives and controls the display portion 112b of the sub-display unit 112 (steps S1 to S4). If the "picture switching" button 321 shown in FIG. 3B is operated by tapping, the microprocessor (MP) 115 sends a switching request command to the CPU 201 and a moving-image playback picture displayed on the sub-display unit 112 is displayed on the main display unit 121. Then, the sub-display unit 112 is returned to its original state (for example, a predetermined touch panel screen) (steps S5 to S6).

FIG. 8 is a flow chart showing a first display processing procedure on character information on the sub-display unit 112 according to the embodiment of the present invention, which is executed under a control of the microprocessor (MP) 115. Here, a function of, upon telop display accompanied by a moving-image playback picture, displaying its character information by scrolling if it cannot be displayed on the screen of the sub-display unit 112 all at once (steps S21 to S24) and stopping the scroll arbitrarily by touching operation on the sub-display unit 112 (steps S25 to S27) is achieved.

FIG. 9 shows a second display processing procedure of character information on the sub-display unit 112 according to the embodiment of the present invention, which is executed under a control of the microprocessor (MP) 115. Here, scroll control upon a display range when part of document displayed on the main display unit 121 is displayed on the sub-display unit 112 is achieved. In this example, a function of stopping/restarting the scroll (step S36 to S39) each time when touch operation is carried out on the sub-display unit 112 is achieved.

Here, an operation of the embodiment of the present invention will be described with reference to each figure described above.

During playback of a moving image on the main display unit 121, the display can be switched to a display thereof on the sub-display unit 112 by a following procedure.

At this time, if the "display on the sub-display" button 311 is selected from a right click menu on a moving-image playback picture window displayed on the main display unit 121 shown in FIG. 3A, the moving-image playback picture displayed on the main display unit 121 can be displayed on the sub-display unit 112 as shown in FIG. 3B.

At this time, if the "display on the sub-display" button 311 is clicked on the moving-image playback picture window displayed on the main display unit 121 shown in FIG. 3A, the CPU 201 transfers the operation command thereof to the microprocessor (MP) 115 provided on the sub-display unit 112 through the USB controller 210.

If the microprocessor (MP) 115 receives an operation command accompanied by mouse click on the "display on the sub-display" button 311, it fetches picture data (picture frame) of the moving-image playback picture displayed on the main display unit 121 into the picture buffer (BUF) 116. Picture data (picture frame) stored in the picture buffer (BUF) 116 is reconstructed following the screen configuration of the sub-display unit 112 and a predetermined display rate so as to generate a new display frame and then, the display portion 112b of the sub-display unit 112 is driven and controlled.

FIG. 6 shows an example of switching a picture data transfer route. FIG. 6 shows schematically a picture data transfer route when display of picture data such as moving-image playback picture and still image read out from the hard disk drive (HDD) 208 is switched from the main display unit 121 to the sub-display unit 112.

FIG. 7 shows a display switching control procedure of the sub-display unit 112 at this time. If the microprocessor (MP) 115 receives an operation command accompanied by mouse click on the "display on the sub-display" button 311 shown in FIG. 3A (step S1 in FIG. 7), it fetches moving-image picture data read out from the hard disk drive (HDD) 208 into the picture buffer (BUF) 116 (step S2 in FIG. 7). The microprocessor (MP) 115 reconstructs picture data (picture frame) following the screen configuration of the sub-display unit 112 and a predetermined display rate so as to generate a new display frame (step S3 in FIG. 7). Then, the microprocessor (MP) 115 drives and controls the display portion 112b of the sub-display unit 112 and displays the moving-image playback picture displayed on the main display unit 121 on the sub-display unit 112 as shown in FIG. 3B (step S4 in FIG. 7). At this time, the sub-display unit 112 displays the "picture switching" button 321 on the right corner of the moving-image playback picture as shown in FIG. 3B. If this "picture switching" button 321 is operated by tapping, the microprocessor (MP) 115 sends a switching request command to the CPU 201 so as to switch a display of the moving-image playback picture from the sub-display unit 112 to the main display unit 121 again and return the sub-display unit 112 to its original state (for example, a predetermined touch panel screen) (steps S5 to S6).

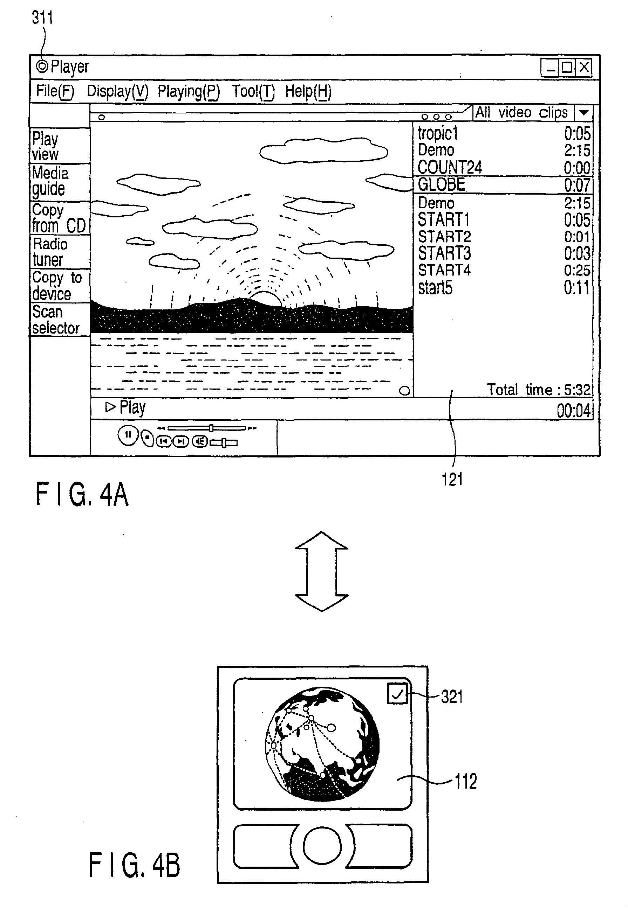

In this way, the moving-image playback picture displayed on the main display unit 121 can be switched to display on the sub-display unit 112. Consequently, if when viewing a moving-image playback picture displayed on the main display unit 121, other work is necessary, the display of the picture is switched to the sub-display unit 112 so as to keep the display of the picture and then another work window is displayed on the main display unit 121 and then, another work can be started on the main display screen. FIGS. 4A and 4B show display examples on the main display unit 121 and the sub-display unit 112 accompanied by this display screen switching. At this time, the CPU 201 recognizes whether or not a picture displayed on the main display unit 121 accompanies sound. If the picture displayed on the main display unit 121 accompanies sound data, the CPU 201 controls the sound controller 223 so as to mute sound accompanied by the picture displayed on the sub-display unit 112.

The picture switching operation can be carried out on remote control with a remote controller as well as by operating the "display on the sub-display" button 311 and "picture switching" button 321. In this case, the CPU 201 transfers the remote control command relating to picture display processing on the sub-display unit 112, which is received through the infrared ray port (Ir port) 222, to the microprocessor (MP) 115 provided on the sub-display unit 112 through the PCI bus 1 and the USB controller 210, the same display switching as when the "display on the sub-display" button 311 or the "picture switching" button 321 is operated is carried out under a control of the microprocessor (MP) 115.

As shown in FIG. 3B, a picture displayed on the sub-display unit 112 can be edited by touching the sub-display unit 112 with the moving-image playback picture displayed on the sub-division 112. In this case, under a control of the microprocessor (MP) 115, the microprocessor (MP) 115 recognizes the content of operation on the touch pad 112a, so that edition of the picture on the sub-display unit 112 is enabled by command processing and data processing accompanied by the operation.

If a moving-image playback picture accompanies a telop indication when the moving image is reproduced on the sub-display unit 112, the microprocessor (MP) 115 performs character information display processing control on the sub-display unit 112 for the telop indication. The microprocessor (MP) 115 acquires character information to be displayed on the screen in each display frame for the telop indication accompanying the moving-image playback picture (step S21 in FIG. 8). the microprocessor (MP) 115 determines that the character information cannot be displayed on the screen of the sub-division all at once (YES in step S22 in FIG. 8), the character information is scrolled (step S23 in FIG. 23). If the sub-display unit 112 is touched when this telop (scroll) is indicated (YES in step S25 in FIG. 8), the microprocessor (MP) 115 stops the scroll (step S26 in FIG. 8) and if the sub-display unit 112 is touched (YES in step S27 in FIG. 8), the microprocessor (MP) 115 restarts the scroll.

Upon display of a still image on the sub-display unit 112, if part thereof is displayed on the sub-display unit 112, its display range can be scrolled. For example, when a document is displayed on the main display unit 121 as shown in FIG. 5A, if part thereof is displayed on the sub-display unit 112 as shown in FIG. 5B, its display range can be scrolled under a control of the microprocessor (MP) 115 as shown in FIG. 9. If the microprocessor (MP) 115 acquires display data (one-screen character data in this case) for the main display unit 121 through the USB controller 210 (step S32 in FIG. 9), the microprocessor (MP) 115 generates a display screen to be indicated on the sub-display unit 112 based on part data of a display range which the sub-display unit 112 can indicate (step S33 in FIG. 9) and then indicated on the sub-display unit 112 (step S34 in FIG. 9). After that, the microprocessor (MP) 115 displays data in a not yet indicated range (step S35 in FIG. 9) successively by scrolling (step S36 in FIG. 9). If the sub-display unit 112 is touched at the time of this scrolled indication (YES in step S37 in FIG. 9), the microprocessor (MP) 115 stops the scroll (step S38 in FIG. 9), and if the sub-display unit 112 is touched again (YES in step S39 in FIG. 9), the microprocessor (MP) 115 restarts the scroll.

When the microprocessor (MP) 115 displays part of the document, which is displayed on the main display unit 121, on the sub-display unit 112 such that it can be scrolled, the microprocessor (MP) 115 displays the scroll bar 322 on the sub-display unit 112 at the same time as shown in FIG. 5B so as to indicate a current indication range and touching of this scroll bar 322 enables switching of the indication range, scroll direction, scroll speed and the like to be controlled depending on the touching position. In the display style shown in FIG. 5B, only a vertical scroll bar is indicated while its lateral scroll is controlled with the left button 113a and the right button 113b.

If other work needs to be executed when a moving-image playback picture or the like displayed on the main display unit 121 is being viewed, the provision of the display control function according to the embodiment of the present invention enables the display of a picture to be switched from the main display unit 121 to the sub-display unit 112 so as to keep the display of the picture and then a screen (window) for another work is displayed on the main display unit 121 so as to execute the another work in the window. Further, it is also possible to construct a system capable of displaying advertisement picture or other graphic information sent through the network, effectively without obstructing user's work by displaying such advertisement picture or the like on the sub-display unit 112 which can be always seen while displaying other various kinds of work information on the main display unit 121. In addition, switching of a picture, editing of the picture and the like can be carried out on the sub-display unit 12 having the touch screen function.

As described above, according to the embodiment of the present invention, a display environment easy to use and having a high functionality can be provided.

The present invention is not restricted to the above described embodiments and may be modified in various ways within a scope not departing from the gist thereof. Further, the respective embodiments contain various aspects of the present invention, so that the various aspects of the invention can be extracted from an appropriate combination of disclosed multiple elements.

Further, even if some elements of the present invention are removed from the all elements indicated in the respective embodiments, if an object of the invention is achieved and an expected effect of the invention is secured, a composition in which those elements are removed can be extracted as other aspect of the present invention.

## Claims

1. An information processing apparatus **characterized by** comprising:
a main display unit (121) which displays a main operation screen;
a sub-display unit (112) which displays a sub-operation screen; and
means (201, 202) for displaying a moving-image playback picture displayed on the main display unit and on the sub-display unit.

2. The information processing apparatus according to claim 1, **characterized in that** the sub-display unit has a touch screen including a tablet, the touch screen displaying the sub-operation screen to enable touch operation.

3. The information processing apparatus according to claim 1, **characterized in that** the means for displaying the moving-image playback picture includes means for carrying out display control inherent of the sub-display unit to generate a frame of a moving image to be displayed on the sub-display unit and display the moving-image playback picture on the sub-display unit.

4. The information processing apparatus according to claim 1, **characterized in that** the means for displaying the moving-image playback picture includes means for switching the display of the moving-image playback picture on the main display unit to that on the sub-display unit.

5. The information processing apparatus according to claim 1, **characterized in that** the means for displaying the moving-image playback picture includes means for deciding a remote control signal and executing the signal and for controlling the display of the moving-image playback picture on the sub-display unit, for switching the display of the moving-image playback picture from the sub-display unit to the main display unit.

6. The information processing apparatus according to claim 1, **characterized in that** the means for displaying the moving-image playback picture includes means for fetching moving-image playback picture data through communication means and for displaying the moving-image playback picture on the sub-display unit on the basis of the moving-image playback picture data fetched by the communication means.

7. The information processing apparatus according to claim 1, **characterized in that** the means for displaying the moving-image playback picture includes means for, when a different moving-image playback picture from in the main display unit is displayed on the sub-display unit, stopping a playback output of sound accompanying the playback picture.

8. The information processing apparatus according to claim 3, **characterized in that** the means for displaying the moving-image playback picture includes means for reflecting a touch operation on the sub-display unit on a picture displayed on the sub-display unit to make the picture displayed on the sub-display unit possible to be edited by touch operation on the sub-display unit.

9. An information processing apparatus **characterized by** comprising:
a main display unit (121) which displays a main operation screen capable of mouse pointer operation;
a sub-display unit (112) which displays a sub-operation screen capable of a predetermined operation; and
means (201, 202) for displaying a picture displayed on the main display unit and on the sub-display unit by a predetermined operation.

10. The information processing apparatus according to claim 9, **characterized in that** the means for displaying the picture on the sub-display unit includes means for, when a predetermined tap is operated on the operation screen, switching the display of the moving-image playback picture on the sub-display unit to that on the main display unit.

11. The information processing apparatus according to claim 9, **characterized in that** the means for displaying the picture on the sub-display unit includes means for, when a predetermined tap is operated on the operation screen, switching the display of the moving-image playback picture on the main display unit to that on the sub-display unit.

12. The information processing apparatus according to claim 9, **characterized in that** the means for displaying the picture on the sub-display unit includes means for, when a predetermined tap is operated on the operation screen, exchanging a moving-image playback picture displayed on the main display unit with a moving-image playback picture displayed on the sub-display unit.

13. An information processing apparatus **characterized by** comprising:
a main display unit (121) which displays a main operation screen capable of mouse pointer operation;
a sub-display unit (112) which displays a sub-operation screen capable of a predetermined operation; and
means (201, 202) for displaying a content to be displayed on the main display unit through a predetermined operation on the sub-display unit.

14. The information processing apparatus according to claim 13, **characterized in that** the means for displaying the content to be displayed on the main display unit includes means for controlling stop and start of the scroll each time when the screen of the sub-display unit is touched.

15. The information processing apparatus according to claim 13, **characterized in that** the means for displaying the content to be displayed on the main display unit includes means for displaying character information or still image incapable of being displayed on the sub-display unit all at once on the sub-display unit such that it can be scrolled.

16. The information processing apparatus according to claim 13, **characterized in that** the means for displaying the content to be displayed on the main display unit includes means for displaying character information or still image displayed on the main display unit such that it can be scrolled.

17. The information processing apparatus according to claim 13, **characterized in that** the means for displaying the content to be displayed on the main display unit includes means for displaying character information or still image displayed on the sub-display unit such that it can be scrolled and means for controlling the scroll following an instruction from outside.

18. The information processing apparatus according to claim 13, **characterized in that** the means for displaying the content to be displayed on the main display unit includes means for displaying character information or still image displayed on the sub-display unit together with a scroll bar to control the scroll by touching the scroll bar.

19. The information processing apparatus according to claim 18, **characterized in that** the means for displaying the content to be displayed on the main display unit includes means for controlling switching of a display range, scroll direction and scroll speed depending on a touch operation position of the scroll bar.
